# EUROPEAN PATENT APPLICATION

(11) **EP 2 550 933 A1**
(43) Date of publication of application: **30.01.2013**
(21) Application number: 11175799.3
(22) Date of filing: 28.07.2011
(51) Int. Cl.: A61C 15/04

(54) **Handling aid for dental floss**

(71) Applicant: The Procter & Gamble Company, Cincinnati, OH 45202 (US)
(72) Inventor: Herzog, Karl, 60489 Frankfurt (DE)
(74) Representative: Joos, Uta Susanne

(57) **Abstract**

A dental floss clamp comprising a screw connection having a threaded nut and a threaded bolt which is moveable within a longitudinal axis of the threaded nut and can be screwed therein wherein the threaded nut comprises a jacket and has an interior thread and an interior groove; the threaded bolt has an exterior thread and an exterior groove; each turn of the interior thread has a first flank , and a second flank, each having a pitch; and wherein the pitch of the second flank with respect to the longitudinal axis of the threaded nut is greater than the pitch of the first flank.

## Description

### FIELD OF THE INVENTION

The invention relates to a handling aid for dental floss and particularly to a clamp for dental floss.

### BACKGROUND OF THE INVENTION

Dental floss is a well-known article used to promote oral hygiene by aiding in the removal of particles lodged in the interproxminal areas of the teeth. In interdental spaces, the tooth surfaces are best freed from plaque by means of dental floss. The surface of conventional dental floss is generally smooth and is sometimes waxed. This makes it difficult for an individual to hold the floss during use because it can not be tightly grasped and slips between the user's fingers. The handling of conventional dental floss is thus difficult.

Often floss is purchased and packaged in a container/dispenser having an internal chamber for securely holding a large continuous length of floss wrapped around a spool or bobbin. A length of floss can be drawn and separated from the spooled portion remaining within the container. The floss emerges through a slit on the top of the container and can be separated from the bobbin by a cutting device. For a typical example see USD0339426. To floss the teeth, a person usually wraps the ends of the floss round the forefinger of each hand to be able to impose tension on a short length of the floss to thereby squeeze it between teeth and manipulate it to remove plaque. This can become painful if the floss is wrapped too tightly, or when the floss becomes taut during use. The resulting constriction of the fingers is unpleasant, and the fingers may remain constricted during the cleaning of a complete set of teeth. Furthermore, lack of control of the floss can lead to cutting of the gums. The chances of this happening increase when the floss is moistened by saliva as the friction between a user's fingers and the floss decreases if the surfaces are moistened. The dental floss can then slip.

Accordingly, an object of the invention is the provision of a device that eliminates the need to wrap the floss round the fingers and which allows the user to effectively control the tension of the floss. It is known in the art that it is desirable for floss to form a closed loop so that tension may be applied on or at a selected portion of the loop that is inserted between the teeth. When utilising a dental floss loop, the fingers need only be constricted during the cleaning of one interdental space. When switching to the next interdental space, the constriction is interrupted as the user moves the floss. Additionally, as this brings into engagement, with the interdental spaces, a different region of the dental floss loop, excessive local use of the floss is avoided. In US4550741, flexible strands are closed by a joining means, and in US5947132 a plurality of flossing loops are connected to form a cascade of loops, provided in a dispenser. US5799673 discloses dental floss with finger loops. A plurality of lengths of floss is provided, each having a finger loop at each end. The lengths of floss are removably connected to each other to form a single continuous piece and are stored within a dispenser. However, there remains a need to find a more efficient way of forming a dental floss loop.

It is the goal of the invention to facilitate the handling of the dental floss by providing a dental floss clamp. The clamp allows the formation of a dental floss loop from a continuous strand of floss and provides several points of contact with the floss which increase friction forces on the floss and thus reduce the risk of the floss slipping when held in the clamp. Consequently, tension can be maintained in the floss throughout use and the need to wind the floss around the user's s fingers is removed.

### SUMMARY OF THE INVENTION

The present invention relates to a dental floss clamp comprising a screw connection having a threaded nut and a threaded bolt which is moveable within a longitudinal axis of the threaded nut and can be screwed therein wherein the threaded nut comprises a jacket and has an interior thread and an interior groove; the threaded bolt has an exterior thread and an exterior groove; each turn of the interior thread has a first flank, and a second flank, each having a pitch; and wherein the pitch of the second flank with respect to the longitudinal axis of the threaded nut is greater than the pitch of the first flank.

The invention further relates to use of the dental floss clamp for securing a piece of dental floss and for forming a dental floss loop.

Additionally, the invention relates to a kit comprising the dental floss clamp and a piece of dental floss.

### BRIEF DESCRIPTION OF THE DRAWINGS

Figure 1 shows a longitudinal section in plane B - B of the floss clamp shown in Figure 3.
Figure 2 shows a longitudinal section in plane A - A of the floss clamp shown in Figure 1.
Figure 3 shows a view in direction C of the floss clamp shown in Figure 1.
Figure 4 shows a longitudinal section in plane B - B of the floss clamp shown in Figure 3.

### DETAILED DESCRIPTION OF THE INVENTION

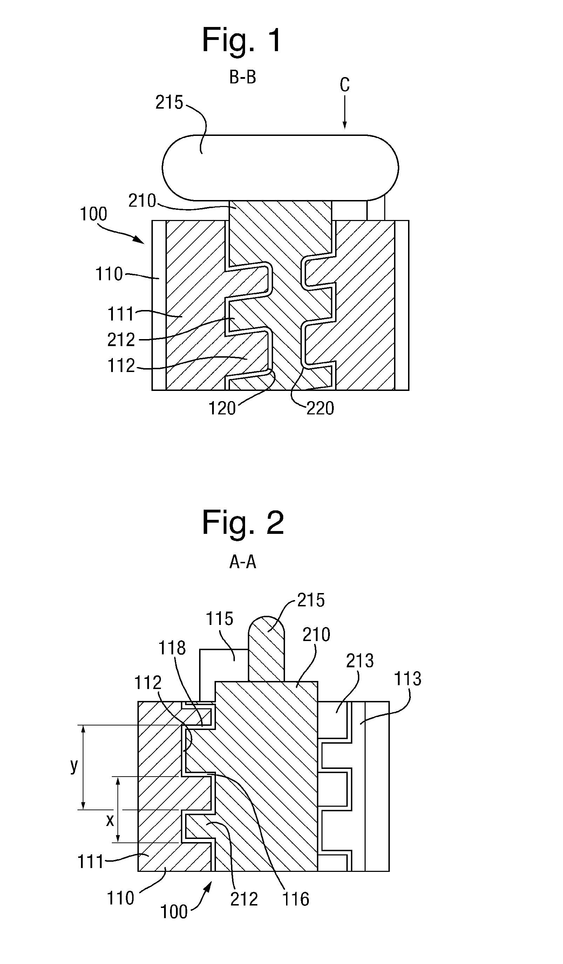

Referring first to Figures 1 to 3, a dental floss clamp 100 comprises a threaded nut 110 and a threaded bolt 210. Preferably the threaded nut 110 and the threaded bolt 210 are made of a plastic material in a two-component injection molding process. The plastic material for the threaded nut 110 may be polyamide. Preferably the plastic material of the threaded bolt 210 is a different material, preferably polyethylene, to that of the threaded bolt in order to prevent the two components sticking together during the injection molding process.

The threaded nut 110 can be injected and can then serve as a mould for the threaded bolt 210. After the injection of the threaded bolt 210 into the threaded nut 110, the threaded bolt 210 shrinks during cooling and a space is created. The threaded bolt 210 thus becomes movable in the threaded nut 110. To aid this process, preferably the melting point of the plastic material which forms the threaded bolt 210 is lower than the glass transition temperature of the plastic material which forms the threaded nut 110.

The threaded nut 110 comprises a jacket 111, an interior thread 112 and an interior groove 113. Preferably the jacket 111 is cylindrical. Preferably the threaded nut 110 further comprises two bevels 114 and a stop 115. The bevels 114 facilitate introduction of the floss into the interior groove 113. Preferably the interior thread 112 is right-handed. Each turn of the interior thread 112 has a first flank 116 with a pitch x, and a second flank 118 with a pitch y. The pitch y of the second flank 118 with respect to the longitudinal axis of the threaded nut 110 is greater than the pitch x of the first flank 116. The pitches x and y are chosen to achieve the exterior thread of the threaded bolt becoming wedged in the interior thread of the threaded nut, thereby allowing a length of dental floss, placed in the groove 113, to be secured between the threaded nut and the threaded bolt, with a rotation of 10 to 120 degrees of the threaded bolt within the threaded nut. The threaded bolt 210 has an exterior thread 212, which matches the interior thread 112. The exterior thread 212 has the same handed-ness as the interior thread 112. Preferably the exterior thread 212 is right-handed. A groove 213 is located in the exterior thread 212. The threaded bolt 210 preferably carries a toggle 215, which rests against the stop 115. When the interior and exterior threads 112, 212 are right-handed, the toggle and stop prevent the user turning the threaded bolt 210 in anti-clockwise direction.

The threaded bolt 210 can preferably be turned against the threaded nut 110 in a clockwise direction 320, until the space between the turns of the interior and exterior threads 112, 212 is depleted by the different pitches of the first and second flanks 116, 118. The different pitches of the first and second flanks result in the exterior thread of the threaded bolt becoming wedged in the interior thread of the threaded nut, thereby allowing a length of dental floss to be secured between the threaded nut and the threaded bolt. This is preferably achieved within a rotation of 10 to 120 degreesof the threaded bolt within the threaded nut, more preferably within 10 to 60 degrees.

The width of the interior and exterior grooves 113, 213, the pitches of the flanks 116, 118 and the space between the threads 112, 212 are chosen in such a manner that the exterior groove 213 disappears completely in the interior groove 113 in the event of a rotation in a clockwise direction 320.

On the side of the grooves 113, 213 located in the direction 320, at least one turn of the interior thread 112 preferably comprises a curve 120 which functions to provide a smooth bend of the floss without cutting it. On the side of the grooves 113, 213 located in the direction 310, at least one turn of the exterior thread 212 preferably comprises a curve 220.

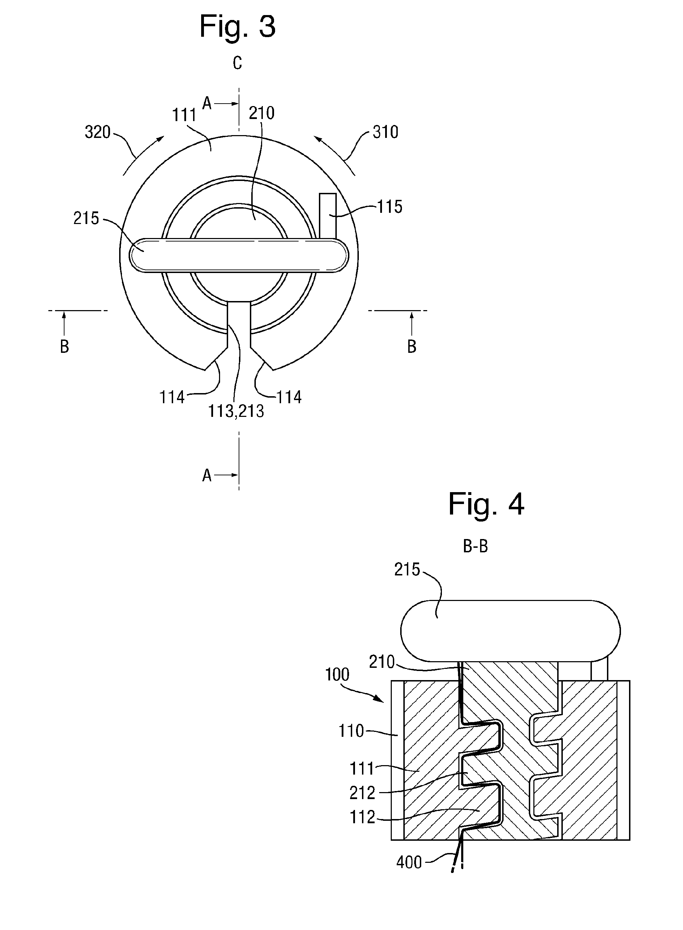

Referring to Figure 4, the user can place two free ends of a length of dental floss 400 into the grooves 113, 213 in such a manner that a dental floss loop is created. By turning the threaded bolt 210 into the threaded nut 110 in the direction 320, the free ends of the dental floss piece 400 are clamped between the turns of the threads 112, 212. The free ends of the dental floss piece 400 thereby wind around the curves 120, 220. The curves 120, 220 provide additional points of contact for the floss and the clamp increasing the friction forces present on the clamp, thus enabling the floss to be gripped in the clamp more securely. If the dental floss loop is pulled by the user, friction acts where the dental floss piece 400 is in contact with the clamp and improves the handling of the floss by increasing the tension and reducing the risk of the floss slipping.

In one embodiment, the user can tighten the dental floss loop between two fingers and can thus remove the plaque in the interdental space. The handling is considerably simpler than without the dental floss clamp 100 because the user need not wrap the floss around their fingers to provide friction during use of the floss. Thus the problems of wrapping floss around the fingers, discussed in the background of the invention, are overcome. After the cleaning of the teeth, the user can open the dental floss clamp 100 by turning the threaded bolt 210 in the direction 310 until the toggle 215 touches the stop 115. He can then remove the length of dental floss 400.

In an alternative embodiment the user need not form a dental floss loop. Instead, the user can place two dental floss clamps 100 at opposed ends of a length of dental floss. The dental floss clamps 100 can be positioned adjacent to the ends of the piece of floss. This will facilitate the handling of the floss by maintaining tension, and it will remove the need to wind the dental floss around the fingers.

The dental floss may be packaged in a container having an internal chamber for securely holding a large continuous length of floss wrapped around a spool or bobbin. The threaded nut 110 and the threaded bolt 210 may be provided in the lid of the container from where either or both of the threaded nut 110 and threaded bolt 210 can be removed. Alternatively the dental floss clamp may be provided separately from the container.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

### DESCRIPTION OF REFERENCE NUMERALS

- 100: Dental floss clamp
- 110: Threaded nut
- 111: Jacket
- 112: Interior thread
- 113: Interior groove
- 114: Bevels
- 115: Stop
- 116: First flank
- x: Pitch of first flank
- 118: Second flank
- y: Pitch of second flank
- 120: Curve of interior thread
- 210: Threaded bolt
- 212: Exterior thread
- 213: Exterior groove
- 215: Toggle
- 220: Curve of exterior thread
- 310: Anti-clockwise direction
- 320: Clockwise direction
- 400: Length of dental floss

## Claims

1. A dental floss clamp (100) comprising a screw connection having a threaded nut (110) and a threaded bolt (210) which is moveable within a longitudinal axis of the threaded nut and can be screwed therein wherein
the threaded nut comprises a jacket (111) and has an interior thread (112) and an interior groove (113);
the threaded bolt has an exterior thread (212) and an exterior groove (213);
each turn of the interior thread (112) has a first flank (116), and a second flank (118), each having a pitch;
and wherein the pitch (y) of the second flank (118) with respect to the longitudinal axis of the threaded nut is greater than the pitch (x) of the first flank (116).

2. A dental floss clamp according to Claim 1 wherein the interior thread (112) of the threaded nut (110) and the exterior thread (212) of the threaded bolt (210) are right handed.

3. A dental floss clamp according to any preceding claim wherein at least one turn of the interior thread (112) comprises a curve (120) within the interior groove (113) and wherein at least one turn of the exterior thread (212) comprises a curve (220) within the exterior groove (213).

4. A dental floss clamp according to any preceding claim wherein the threaded nut (110) further comprises a stop (115) and wherein the threaded bolt (120) further comprises a toggle (215).

5. A dental floss clamp according to any preceding claim wherein the clamp is made of thermoplastic material.

6. A dental floss clamp according to Claim 5 wherein the clamp is produced by injection molding.

7. A dental floss clamp according to Claim 6 wherein the threaded nut (110) can be injected and serve as the mould for the threaded bolt (210).

8. A dental floss clamp according to any of Claims 5-7 wherein the threaded nut (110) is comprised of a first thermoplastic material and the threaded bolt (210) is comprised of a second thermoplastic material.

9. A dental floss clamp according to any of Claims 6-9 wherein the melting point of the plastic material which forms the threaded bolt 210 is lower than the glass transition temperature of the plastic material which forms the threaded nut 110.

10. A dental floss clamp according to any preceding claim wherein the clamp is integral with a dental floss container.

11. Use of a dental floss clamp according to any preceding claim for securing a piece of dental floss.

12. Use according to Claim 12 wherein a dental floss loop is created.

13. A method for improving the handling of dental floss wherein a piece of dental floss is secured in a dental floss clamp according to any of claims 1-10.

14. A kit comprising:
a. a dental floss clamp according to any one of Claims 1-10
b. a length of dental floss.
